# EUROPEAN PATENT APPLICATION

(11) **EP 4 818 476 A1**
(43) Date of publication of application: **07.10.2026**
(21) Application number: 26170481.1
(22) Date of filing: 02.04.2026
(51) Int. Cl.: F01D 25/16

(54) **MOUNT BUSHING ASSEMBLIES WITH OUTER SLEEVE SLIT FOR GAS TURBINE ENGINES**

(30) Priority: 02.04.2025 US 202519098781
(71) Applicant: RTX Corporation, Farmington, CT 06032 (US)
(72) Inventor: DAVIS-AMENDOLA, Kerry Lynn, Farmington, 06032 (US); BOGUE, William, Farmington, 06032 (US); KOZAN, Stuart C., Farmington, 06032 (US)
(74) Representative: Dehns

(57) **Abstract**

A device (60) may include an inner sleeve (66) having a cylindrical body (72) defined by a radially inner surface (74) and a radially outer surface (76). The device may include an outer sleeve (68) positioned outside of the inner sleeve (66), the outer sleeve (68) including at least one slit (82) extending axially along the outer sleeve (68). A device may include a rubber component (70) disposed between the radially outer surface (76) and the outer sleeve (68), wherein the rubber component (70) circumscribes at least a portion of the inner sleeve (66).

## Description

### BACKGROUND

This invention relates to gas turbine engines, and more particularly to mount bushing assemblies.

Gas turbine engines typically include a compressor section and a turbine section. The air is compressed in the compressor section. From the compressor section the air is introduced into a combustor section where it is mixed with fuel and ignited in a combustor. Products of this combustion pass downstream over a turbine section to extract energy for driving the compressor section.

Mount bushing assemblies are provided in gas turbine engines to provide vibration dampening and load distribution for gas turbine engine components, including but not limited to, gearboxes.

### SUMMARY

According to an aspect of the present invention, there is provided a mount bushing assembly including: an inner sleeve having a cylindrical body defined by a radially inner surface and a radially outer surface; an outer sleeve positioned outside of the inner sleeve, the outer sleeve including at least one slit extending axially along the outer sleeve; and a rubber component disposed between the radially outer surface and the outer sleeve, wherein the rubber component circumscribes at least a portion of the inner sleeve.

Optionally, and in accordance with the above, the inner sleeve includes an opening configured to receive a mounting pin.

Optionally, and in accordance with any of the above, the at least one slit is a first slit, and further including an opposite second slit extending axially along the outer sleeve such that the outer sleeve forms a first outer sleeve segment and a second outer sleeve segment, the first outer sleeve segment and the second outer sleeve segment each having an arc shape.

Optionally, and in accordance with any of the above, the outer sleeve and the rubber component each include terminals ends, the terminal ends of the outer sleeve and the terminal ends of the rubber component are substantially planar, and wherein the inner sleeve includes at least one terminal end extending axially above, e.g. axially beyond, the outer sleeve and the rubber component.

Optionally, and in accordance with any of the above, the outer sleeve and the rubber component each include terminals ends, the terminal ends of the outer sleeve and the terminal ends of the rubber component are substantially planar, and wherein the inner sleeve includes at least one terminal end extending axially above the outer sleeve and the rubber component.

Optionally, and in accordance with any of the above, the assembly further includes a gearbox, wherein the inner sleeve, outer sleeve, and rubber component are positioned on the gearbox.

According to another aspect of the present invention, there is provided a gas turbine engine assembly including: a mount bushing assembly positioned, the mount bushing assembly including an inner sleeve having a cylindrical body defined by a radially inner surface and a radially outer surface, an outer sleeve positioned outside of the inner sleeve, and a rubber component disposed between the radially outer surface and the outer sleeve, a mounting pin within the mount bushing assembly, one of the inner sleeve and the outer fixed to a mounted structure and the other one of the inner sleeve and the outer sleeve fixed to a static structure, wherein the outer sleeve includes at least one slit extending axially along the outer sleeve, and wherein the rubber component circumscribes at least a portion of the inner sleeve.

Optionally, and in accordance with the above, the at least one slit is a first slit, and further including an opposite second slit extending axially along the outer sleeve such that the outer sleeve forms a first outer sleeve segment and a second outer sleeve segment.

Optionally, and in accordance with any of the above, the first outer sleeve segment and the second outer sleeve segment each have an arc shape.

Optionally, and in accordance with any of the above, the outer sleeve and the rubber component each include terminal ends that are substantially planar.

Optionally, and in accordance with any of the above, an end portion of the inner sleeve extends axially above a terminal end of the outer sleeve and a terminal end of the rubber component.

Optionally, and in accordance with any of the above, the inner sleeve and the outer sleeve are made of different metallic materials.

Optionally, and in accordance with any of the above, the mounted structure is a gearbox.

In some aspects, the techniques described herein relate to an assembly, where the gearbox is made of aluminum, and the outer sleeve is coated with a galvanic protection coating that prevents electrochemical reactions between the gearbox and the outer sleeve.

Optionally, and in accordance with any of the above, the outer sleeve is coated with a wear-resistant coating.

According to another aspect of the present invention, there is provided a method of assembling a mount bushing assembly including: forming an inner sleeve that has a cylindrical body that defines a radially inner surface and a radially outer surface; forming rubber component on the radially outer surface of the inner sleeve, wherein the rubber component circumscribes at least a portion of the inner sleeve; and then attaching an outer sleeve to the rubber component to form a mount bushing assembly, wherein the outer sleeve includes at least one slit that extends axially along the outer sleeve.

Optionally, and in accordance with any of the above, forming the inner sleeve includes forming an opening that extends axially through the cylindrical body.

Optionally, and in accordance with any of the above, forming the rubber component includes overmolding the rubber component on the radially outer surface.

Optionally, and in accordance with any of the above, attaching the outer sleeve includes adhesively bonding the outer sleeve to the rubber component.

Optionally, and in accordance with any of the above, before the attaching step, an end portion of the inner sleeve extends axially above a terminal end of the rubber component.

The present invention may include any one or more of the individual features disclosed above and/or below alone or in any combination thereof.

The various features and advantages of this invention will become apparent to those skilled in the art from the following detailed description. The drawings that accompany the detailed description can be briefly described as follows.

### BRIEF DESCRIPTION OF THE DRAWINGS

FIG. 1 illustrates an example gas turbine engine.
FIG. 2A schematically illustrates a mount bushing assembly coupled between a platform and a gearbox of the gas turbine engine of FIG. 1.
FIG. 2B shows the mount bushing assembly of FIG. 2A with the platform removed.
FIG. 3 is a perspective view of the mount bushing assembly of FIG. 2.
FIG. 4 illustrates is a perspective view of another exemplary mount bushing assembly.
FIG. 5 illustrates an exemplary flowchart for assembling a mount bushing assembly.
FIG. 6A shows a first formation step.
FIG. 6B shows a subsequent formation step.

Like reference numbers and designations in the various drawings indicate like elements.

### DETAILED DESCRIPTION

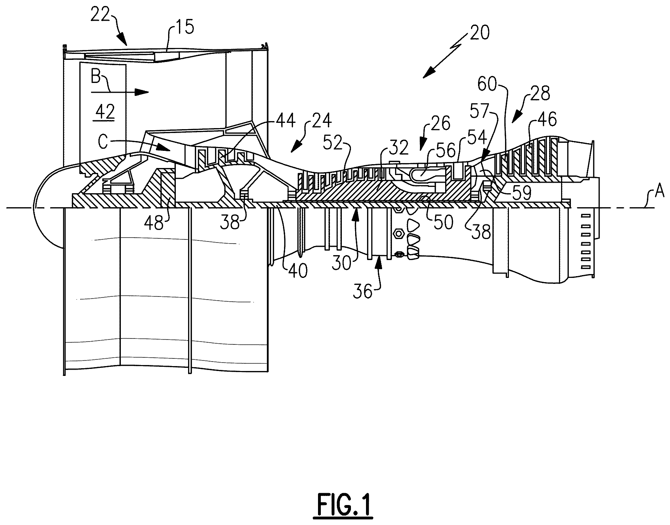

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. **In** other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. **It** will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]0.5. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

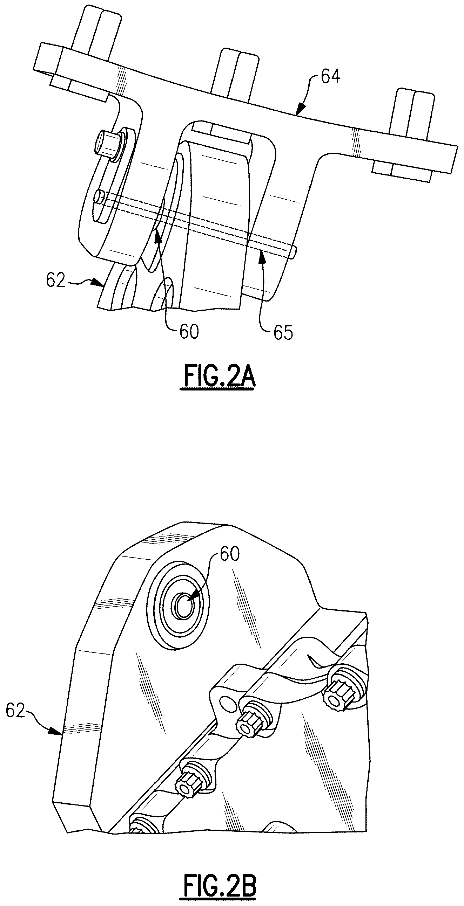

Referring to FIGS. 2A and 2B, with continuing reference to FIG. 1, a mount bushing assembly 60 is illustrated schematically. The mount bushing assembly 60 may be configured to be coupled on one side to a gearbox 62 and on another side to a platform (e.g., an engine mount casing or other static structure) 64 via a mounting pin 65 (shown in dashed lines for illustrative purposes only). In an embodiment, the gearbox 62 may be a drive or main gearbox which couples directly with the inner shaft 40 for transferring power to the fan 42. In another embodiment, the gearbox 62 may be an auxiliary gearbox which drives various accessories and systems of the engine 20, such as fuel pumps, oil pumps, etc.

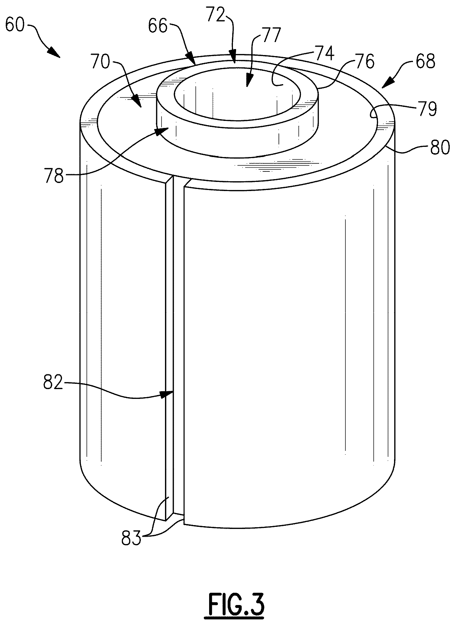

Referring to FIG. 3, the mount bushing assembly 60 may include an inner sleeve 66, an outer sleeve 68, and a rubber component 70 disposed between the inner sleeve 66 and the outer sleeve 68. The mount bushing assembly 60 may be configured to provide vibration dampening to accommodate relative movement between the gearbox 62 and the platform 64.

The inner sleeve 66 may include a cylindrical body 72 defined by a radially inner surface 74 and a radially outer surface 76. An opening 77 may extend through the cylindrical body 72. The opening 77 may be configured to receive the mounting pin 65 for securing the mount bushing assembly 60 to the gearbox 62 and the platform 64. In an embodiment, the mounting pin 65 contacts the radially inner surface 74. At least an end portion 78 of the inner sleeve 66 may extend axially above the terminal ends of both the outer sleeve 68 and the rubber component 70 to provide additional structural support and alignment. In an embodiment, the inner sleeve 66 may be made of a metallic material.

The outer sleeve 68 may be positioned outside of the inner sleeve 66 and the rubber component 70. The outer sleeve 68 may include an inner surface 79 and an outer surface 80. The inner surface 79 may be configured to interface with the rubber component 70. In one embodiment, the inner surface 79 may be adhered to the rubber component 70. The outer surface 80 may be configured to interface with the gearbox 62 when the mount bushing assembly 60 is installed.

The outer sleeve 68 may include at least one slit 82 extending along the length of the outer sleeve 68 such that the outer sleeve 68 is not a complete cylinder. In this embodiment, the outer sleeve 68 may have an arc shape and may contact the entire radially outer surface the rubber component 70, except for a portion of the rubber component 70 that remains uncovered due to the space defining the slit 82. The uncovered portion corresponds to the gap between longitudinal ends 83 of the outer sleeve 68 (i.e., the distance between longitudinal ends 83).

The outer sleeve 68 may be made of a ductile metallic material that allows the outer sleeve 68 to be deformed. In an embodiment, the slit 82 may allow the outer sleeve 68 to move radially inward and radially outward in response to an applied force that adjusts the distance between the longitudinal ends 83. This movement allows the outer sleeve 68 to adjust its shape and compress the rubber component 70, which is particularly useful during installation of the mount bushing assembly 60 or when dynamic forces are acting on the mount bushing assembly 60.

As noted above, the outer sleeve 68 may be adhesively bonded to the rubber component 70. Adhesively bonding the outer sleeve 68 to the rubber component 70 allows the inner sleeve 66 and the outer sleeve 68 to be made of different materials, which would not be feasible with injection molding due to the materials having different coefficients of thermal expansion (CTE). In an embodiment, the outer sleeve 68 is selected from a material that matches the wear characteristics of the component it interfaces with (i.e., the gearbox 62). Additionally, if the gearbox 62 is made of aluminum or another material prone to galvanic corrosion, the outer sleeve 68 can be coated with a galvanic protection coating to prevent electrochemical reactions. Alternatively, a wear-resistant coating can be applied to the outer sleeve 68 to enhance its durability under repeated loading and frictional contact.

The rubber component 70 may be disposed between the radially outer surface 76 of the inner sleeve 66 and the inner surface 79 of the outer sleeve 68 (i.e., the rubber component 70 is sandwiched between the inner sleeve 66 and the outer sleeve 68). In an embodiment, the rubber component 70 may be overmolded onto inner sleeve 66. As used herein, "overmolding" involves molding a component (e.g., the rubber component 70) directly onto another component (e.g., the inner sleeve 66).

The rubber component 70 may circumscribe the entire radially outer surface 76 of the inner sleeve 66, except for the end portion 78 of the inner sleeve 66 that extends axially above the terminal ends of the rubber component 70 and the outer sleeve 68. In an embodiment, the terminal ends of the rubber component 70 and the terminal ends of the outer sleeve 68 are substantially planar.

The rubber component 70 may be made of a material that is designed to absorb energy and dampen vibrations between the gearbox 62 and the platform 64. For instance, the rubber component 70 may be configured to expand and contract to adapt to dynamic operating conditions. As the rubber component 70 expands, the slit 82 allows the outer sleeve 68 to deform and change shape. More specifically, the outward expansion of the rubber component 70 pushes against the inner surface 79 of the outer sleeve 68, which causes the longitudinal ends 83 of the outer sleeve 68 to move apart. This increase in distance between the longitudinal ends 83 allows circumferential strain of the rubber component 70, which is beneficial for absorbing energy. By encouraging radial expansion, axial strain of the rubber component 70 is limited to prevent debonding between the rubber component 70 and the inner sleeve 66. Moreover, when the outer sleeve 68 is radially compressed, the rubber component 70 can contract to move the longitudinal ends 83 closer together.

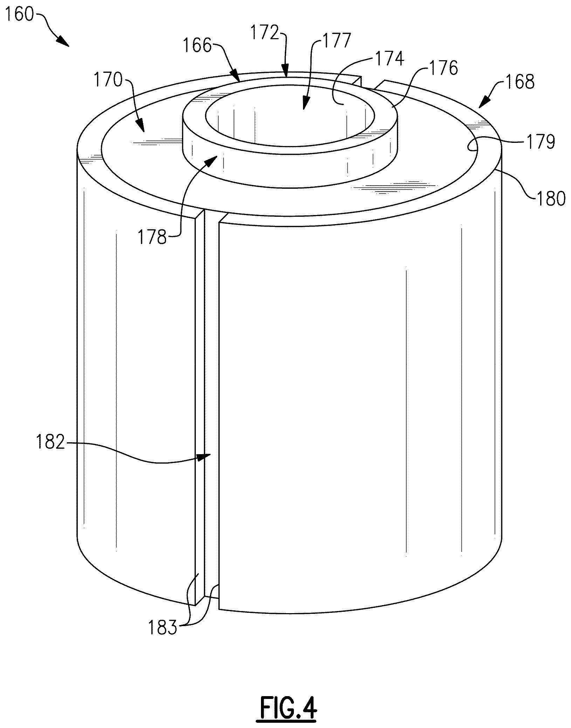

FIG. 4 illustrates another exemplary mount bushing assembly 160. The mounting bushing assembly 160 may be similar to the mounting bushing assembly 60 in that the mount bushing assembly 160 includes an inner sleeve 166, an outer sleeve 168, and a rubber component 170 disposed between the inner sleeve 166 and the outer sleeve 168. However, in this embodiment, the outer sleeve 168 may include more than one slit 182 arranged oppositely along the length of the outer sleeve 168.

The slits 182 may divide the outer sleeve 168 into a first outer sleeve segment 168A and a second outer sleeve segment 168B. The first outer sleeve segment 168A and the second outer sleeve segment 168B may each have an arc shape and may contact the entire radially outer surface of the rubber component 170, except for the two portions of the rubber component 170 that remain uncovered due to the spaces defining the slits 182. These uncovered portions correspond to the distance between longitudinal ends 183 of the first and second outer sleeve segments 168A, 168B.

When the rubber component 170 expands, the rubber component 170 pushes radially outward against the inner surface of the first and second outer sleeve segments 168A, 168B, which causes the space between the longitudinal ends 183 to widen. That is, the first and second outer sleeve segments 168A, 168B are forced apart circumferentially. When the rubber component 170 contracts, the rubber component 170, the first and second outer sleeve segment 168A, 168B move closer together, which reduces the space between the longitudinal ends 183. This contraction allows the mount bushing assembly 160 to return to its original shape.

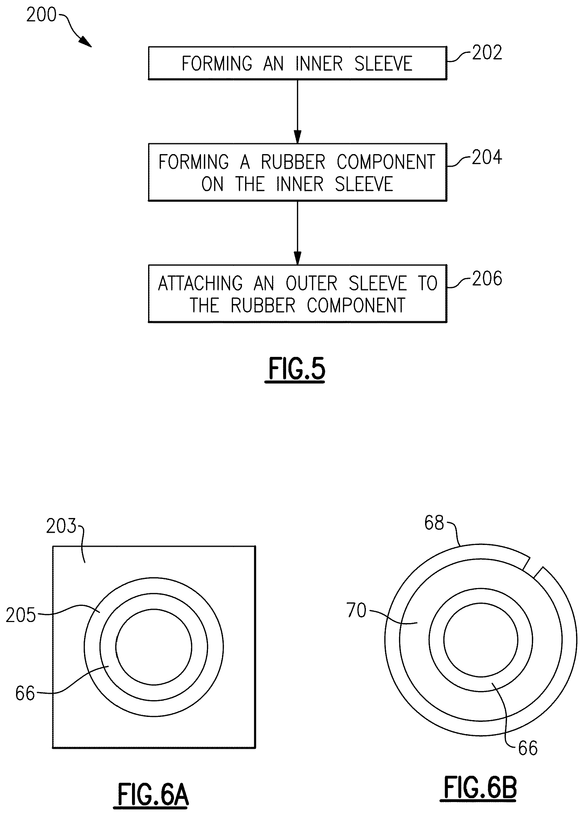

FIG. 5 illustrates an exemplary method 200 for assembling the mount bushing assembly 60. It should be appreciated that the method 200 is equally applicable for assembling the mount bushing 160. At step 202, an inner sleeve 66 is formed. The inner sleeve 66 may be formed from a metallic material to include a cylindrical body 72 with a radially inner surface 74 and a radially outer surface 76, and an opening 77 that extends axially through the cylindrical body 72.

At step 204, a rubber component 70 is formed on the radially outer surface 76 of the inner sleeve 66. The rubber component 70 may be overmolded onto the radially outer surface 76.

As shown in FIG. 6A, a liquid rubber precursor may be injected into a mold cavity 205 of a mold 203 that circumscribes at least a portion of the inner sleeve 66, and then the precursor may be cured to form the rubber component 70 having a bonded interface with the inner sleeve 66. In an embodiment, the rubber component 70 may undergo a post-curing step to improve cross-linking. As discussed above, the rubber component 70 contacts the entire radially outer surface 76 of the inner sleeve 66, except for an end portion 78 that extends axially above a terminal end of the rubber component 70.

At step 206, an outer sleeve 68 is then attached to the radially outer surface of the rubber component 70 (FIG. 6B). The outer sleeve 68 may be formed to have an arc shape and may include an inner surface 79 configured to interface with the rubber component 70 and an outer surface 80 configured to interface with the gearbox 62. In an embodiment, the outer sleeve 68 may be attached to the rubber component 70 by applying adhesive bonding therebetween. The adhesive for bonding the outer sleeve 68 to the rubber component 70 can be applied either before or after the rubber component 70 is post-cured. If applied before post-curing, the adhesive may undergo curing simultaneously with the rubber component 70. Alternatively, applying the adhesive after post-curing allows for precise control over the bonding process. The outer sleeve 68 may be sized such that the terminal ends of the outer sleeve 68 and the terminal ends of the rubber component 70 are substantially planar before the attaching step.

Although the different examples have the specific components shown in the illustrations, embodiments of this invention are not limited to those particular combinations. It is possible to use some of the components or features from one of the examples in combination with features or components from another one of the examples.

Although particular step sequences are shown, described, and claimed, it should be understood that steps may be performed in any order, separated or combined unless otherwise indicated and will still benefit from the present invention.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the invention may be practiced other than as specifically described. For that reason, the appended claims should be studied to determine true scope and content.

## Claims

1. A mount bushing assembly (60; 160) comprising:
an inner sleeve (66; 166) having a cylindrical body (72; 172) defined by a radially inner surface (74; 174) and a radially outer surface (76; 176);
an outer sleeve (68; 168) positioned outside of the inner sleeve (66; 166), the outer sleeve (68; 168) including at least one slit (82; 182) extending axially along the outer sleeve (68; 168); and
a rubber component (70; 170) disposed between the radially outer surface (76; 176) and the outer sleeve (68; 168), wherein the rubber component (70; 170) circumscribes at least a portion of the inner sleeve (66; 166).

2. The assembly as recited in claim 1, wherein the inner sleeve (66; 166) includes an opening (77; 177) configured to receive a mounting pin (65).

3. The assembly as recited in claim 1 or 2, wherein the at least one slit (182) is a first slit (182), and further comprising an opposite second slit (182) extending axially along the outer sleeve (168) such that the outer sleeve (168) forms a first outer sleeve segment (168A) and a second outer sleeve segment (168B), and wherein, optionally, the first outer sleeve segment (168A) and the second outer sleeve segment (168B) each have an arc shape.

4. The assembly as recited in any preceding claim, wherein the outer sleeve (68; 168) and the rubber component (70; 170) each include terminal ends that are substantially planar.

5. The assembly as recited in claim 4, wherein:
an end portion (78; 178) of the inner sleeve (66; 166) extends axially above a terminal end of the outer sleeve (68; 168) and a terminal end of the rubber component (70; 170); and/or
the inner sleeve (66; 166) includes at least one terminal end extending axially above the outer sleeve (68; 168) and the rubber component (70; 170).

6. The assembly as recited in any preceding claim, further comprising a gearbox (62), wherein the inner sleeve (66; 166), outer sleeve (68; 168), and rubber component (70; 170) are positioned on the gearbox (62).

7. The assembly as recited in any preceding claim, wherein the inner sleeve (66; 166) and the outer sleeve (68; 168) are made of different metallic materials.

8. The assembly as recited in any preceding claim, wherein the outer sleeve (68; 168) is coated with a wear-resistant coating.

9. A gas turbine engine assembly comprising:
the mount bushing assembly (60; 160) of any preceding claim; and
a mounting pin (65) within the mount bushing assembly (60; 160), one of the inner sleeve (66; 166) and the outer sleeve (68; 168) fixed to a mounted structure (62; 64) and the other one of the inner sleeve (66; 166) and the outer sleeve (68; 168) fixed to a static structure (62; 64).

10. The assembly as recited in claim 9, wherein the mounted structure is a gearbox (62).

11. The assembly as recited in claim 10, wherein the gearbox (62) is made of aluminum, and the outer sleeve (68; 168) is coated with a galvanic protection coating that prevents electrochemical reactions between the gearbox (62) and the outer sleeve (68; 168).

12. A method of assembling a mount bushing assembly (60; 160), the method comprising:
forming an inner sleeve (66; 166) that has a cylindrical body (72; 172) that defines a radially inner surface (74; 174) and a radially outer surface (76; 176);
forming rubber component (70; 170) on the radially outer surface (76; 176) of the inner sleeve (66; 166), wherein the rubber component (70; 170) circumscribes at least a portion of the inner sleeve (66; 166); and
then attaching an outer sleeve (68; 168) to the rubber component (70; 170) to form a mount bushing assembly (60; 160), wherein the outer sleeve (68; 168) includes at least one slit (82; 182) that extends axially along the outer sleeve (68; 168).

13. The method as recited in claim 12, wherein forming the inner sleeve (66; 166) includes forming an opening (77; 177) that extends axially through the cylindrical body (72; 172).

14. The method as recited in claim 12 or 13, wherein forming the rubber component (70; 170) includes overmolding the rubber component (70; 170) on the radially outer surface (76; 176).

15. The method as recited in any of claims 12 to 14, wherein:
attaching the outer sleeve (68; 168) includes adhesively bonding the outer sleeve (68; 168) to the rubber component (70; 170); and/or
before the attaching step, an end portion (78; 178) of the inner sleeve (66; 166) extends axially above a terminal end of the rubber component (70; 170).
